# EUROPEAN PATENT SPECIFICATION

(11) **EP 1 283 661 B1**
(45) Date of publication and mention of the grant of the patent: **15.12.2010**
(21) Application number: 02253058.8
(22) Date of filing: 30.04.2002
(51) Int. Cl.: H05B 6/68, G01N 27/04

(54) **Humidity sensor and microwave oven including a humidity sensor**
Feuchtigkeitssensor und Mikrowellenofen versehen mit einem Feuchtigkeitssensor
Capteur d'humidité et four à micro-ondes possédant un capteur d'humidité

(30) Priority: 07.08.2001 KR 2001047535; 07.12.2001 US 5312
(43) Date of publication of application: 12.02.2003
(73) Proprietor: SAMSUNG ELECTRONICS CO., LTD., Suwon-si, Gyeonggi-do 442-742 (KR)
(72) Inventor: Shon, Jong-Chull, Suwon-City, Kyungki-Do (KR)
(74) Representative: Walaski, Jan Filip

(56) References cited:
- GB-A- 930 737
- US-A- 4 015 230
- US-A- 5 744 785
- US-A- 5 861 758

## Description

The present invention relates to a humidity sensor.

In conventional microwave ovens, the intensity of microwaves and the cooking time are determined according to the food to be or being cooked. The material, shape and the kind of the food placed in the cooking chamber of the microwave oven determines the absorption of the microwaves and the amount of energy required. Consequently, some microwave ovens detect and assess the state of the food being cooked using a variety of sensors. Based upon the assessed states, microwave ovens carry out cooking operations.

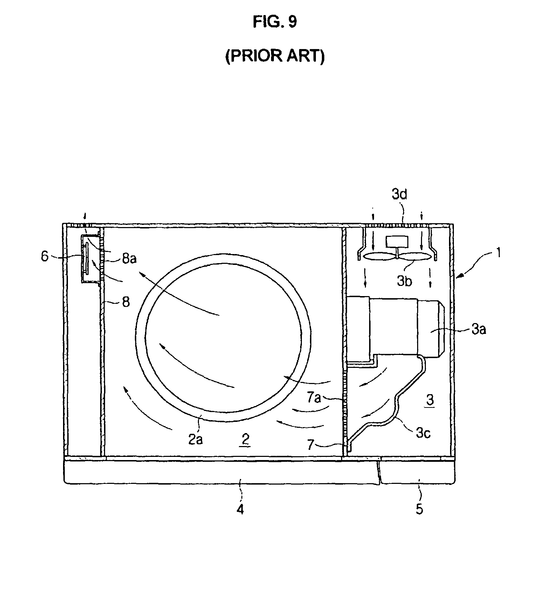

As shown in Figure 9, a conventional microwave oven comprises a body 1, the interior of which is partitioned into a cooking chamber 2 and a electrical component compartment 3. A door 4 is hinged to the body 1 for closing the cooking chamber 2. The microwave oven also has a control panel 5, which is installed at the front of the body 1 and provided with a variety of control buttons. A humidity sensor 6 is installed in the body 1 to sense the state of food in the cooking chamber 2.

The cooking chamber 2 has an opening at the front and has a turntable-type cooking tray 2a rotatably mounted at the bottom. An air inlet 7a is formed in a front portion of a sidewall 7 of the cooking chamber 2 so as to put the cooking chamber 2 in communication with the electrical component compartment 3. Air flows from the electrical component compartment 3 into the cooking chamber 2 through the air inlet 7a. An air outlet 8a is formed in a rear portion of the opposite sidewall 8 of the cooking chamber 2 for discharging the air from the cooking chamber 2 to the atmosphere outside the microwave oven.

A magnetron 3a, a cooling fan 3b, an air guide duct 3c, and other similar devices (not shown) are installed within the electrical component compartment 3. The magnetron 3a generates the high-frequency electromagnetic waves, while the cooling fan 3b sucks atmospheric air into the electrical component compartment 3 to cool the elements 3a, 3b installed within the electrical component compartment 3. The air guide duct 3c guides the air inside the electrical component compartment 3 to the air inlet 7a and into the cooking chamber 2. The cooling fan 3b is installed between the magnetron 3a and a rear wall of the electrical component compartment 3. In order to allow the atmospheric air to flow into the electrical component compartment 3, a predetermined area of the rear wall of the electrical component compartment 3 is perforated to form a plurality of air suction holes 3d.

The humidity sensor 6 is installed on a sidewall 8 of the cooking chamber 2 at a position adjacent to an air outlet 8a. Thus, the humidity sensor 6 is located in an air discharging passage leading from the cooking chamber 2. The humidity sensor 6 thus senses the humidity of the exhaust air discharged from the cooking chamber 2 through the air outlet 8a and that is deflected by a surface of the humidity sensor 6. The humidity sensor 6 is connected to a circuit board (not shown) installed in the control panel 5, and outputs a signal to the circuit board.

When the microwave oven is turned on, food on the cooking tray 2a is irradiated with high-frequency electromagnetic waves from the magnetron 3a and thereby cooked.

During operation of the microwave oven, the cooling fan 3b is rotated to form a suction force to suck the atmospheric air into the electrical component compartment 3 through the air suction holes 3d for cooling the elements installed in the compartment 3. The air is, thereafter, guided to the air inlet 7a by the air guide duct 3c and introduced into the cooking chamber 2 through the air inlet 7a. The air inside the cooking chamber 2 is exhausted along with vapour (moisture) from the food, which is exhausted to the atmosphere through the air outlet 8a as shown by the arrows of Figure 9. Therefore, it is possible to remove odours and vapour from food during the operation of the oven. When the exhaust air flows from the cooking chamber 2 to the atmosphere, it comes into contact with and is turned by the humidity sensor 6. The humidity sensor 6 senses the humidity of the exhaust air and outputs a signal to the circuit board of the control panel 5. The circuit board of the control panel 5 controls the operation of the magnetron 3a, the cooking tray 2a and the cooling fan 3b in response to the signal from the humidity sensor 6, thus automatically cooks the food on the tray 2a.

The conventional microwave oven shown in Figure 9 uses the humidity sensor 6 to detect the cooking state of food. The conventional microwave oven detects the moisture from the food by determining the humidity of the exhausting air and controls the cooking operation according to the detected moisture.

The conventional humidity sensor 6 is a porous humidity sensor made of a semiconductor ceramic, i.e. MgCrO₄-TiO₂. The conventional semiconductor ceramic humidity sensor 6 has the characteristic that its resistance varies according to the amount of moisture that infiltrates into its pores/holes.

However, the conventional semiconductor ceramic humidity sensor 6 is disadvantageous in that its fabrication cost is high. In addition, when moisture remains in the holes, the detection performance deteriorates and the overall life span of the sensor 6 is shortened.

US5,861,758 discloses a moisture sensor for use on a vehicle windscreen having intermeshed electrodes, wherein moisture on the electrodes completes a conduction path between the electrodes.

US5,744,785 discloses a method for controlling cooking in a microwave using a humidity sensor.

The present invention provides microwave oven including a humidity sensor **characterised in that** the humidity sensor comprises a non-conductive substrate having at least one vent arranged to allow air to pass therethrough, and first and second electrodes on the substrate, the electrodes being separated by an air-gap.

Preferably, the substrate comprises a ceramic or polymer layer which forms the bottom of the air-gap.

Preferably, the substrate comprises a printed circuit board.

Preferably, the electrodes include anti-corrosive layers which may comprise a layer of gold and a layer of nickel.

Preferably, the width of the gap between the electrodes is in the range 0.05mm to 0.25mm, preferably about 0.15mm.

Embodiments of the present invention will now be described, by way of example, with reference to Figures 1 to 8 and 10 of the accompanying drawings, in which:
Figure 1 is a partial sectional view showing a microwave oven according to the present invention;
Figure 2 is a block diagram of the microwave oven of Figure 1;
Figure 3 is a perspective view showing a first humidity detector according to the present invention;
Figure 4 is a perspective view showing a second humidity detector according to the present invention;
Figure 5 is a circuit diagram of a humidity detector according to the present invention;
Figure 6 is a circuit diagram of a humidity detector according to the present invention;
Figure 7 is a graph showing a cooking state determination according to the detection results of a from a humidity detector according to the present invention;
Figure 8 is a flowchart showing the operation of the microwave oven according to the present invention;
Figure 9 is a partial sectional view showing a conventional microwave oven; and
Figure 10 is a graph showing the effect of gap distances on sensing voltages for detectors according to the present invention.

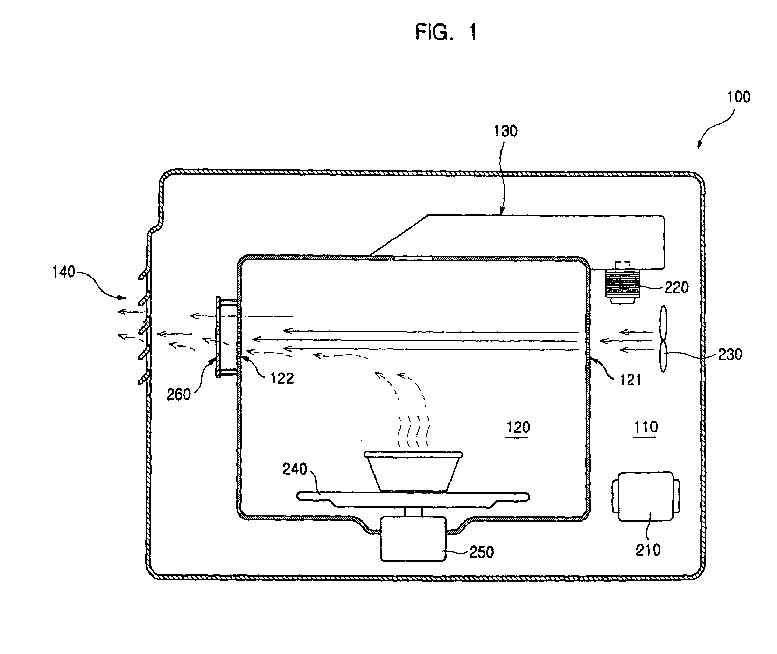

Referring to Figure 1, an oven body 100 is provided with a cooking chamber 120 and an electric device chamber 110. A high-voltage transformer 210, a magnetron 220, and an air circulation fan 230 are located in the electric device chamber 110. Additionally, the oven body 100 is provided with a wave guide 130 that transmits microwaves generated in the magnetron 220 to the cooking chamber 120. While not shown, it is understood that additional devices can be located in the electric device chamber 110.

A tray 240 to hold the food to be cooked and a tray motor 250 to rotate the tray 240 are placed in the cooking chamber 120. Air inlets 121 are formed on one side of the wall of the cooking chamber 120 to allow air circulated by the fan 230 to enter the cooking chamber 120. Air outlets 122 are formed on another side of the wall of the cooking chamber 120 to allow air having entered the cooking chamber 120 through the air inlets 121 to be discharged from the cooking chamber 120. A humidity detector 260 is mounted on the outside of the wall of the cooking chamber 120 opposite the air outlets 122. It is understood that the tray 240 and the tray motor 250 need not be present in all circumstances. Further, it is understood that ones of the air outlets 122 may be disposed on additional walls.

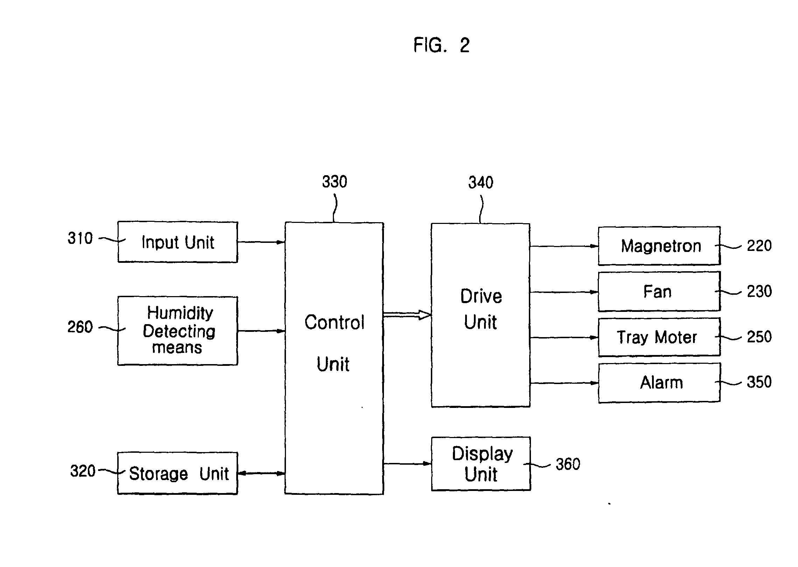

Referring to Figure 2, the microwave oven has a control unit 330 to control an overall operation of the microwave oven. The control unit 330 may be a general or special purpose computer, depending on the circumstances. An input unit 210 to receive cooking commands from a user and which is in communication with the control unit 330. The humidity detector 260 is in communication with the control unit 330. A storage unit 320 to store operating software and cooking information data is in communication with the control unit 330.

In addition, a drive unit 340 is used to operate the magnetron 220, the fan 230, the tray motor 250 and an alarm 350, which aurally informs a user of the operation of the microwave oven. The drive unit 340 is in communication with the control unit 330. A display unit 360 is in communication with the control unit 330 and is controlled by the control unit 330. It is understood that additional elements may be added or ones of the shown elements may be removed according to a desired functionality of the microwave oven.

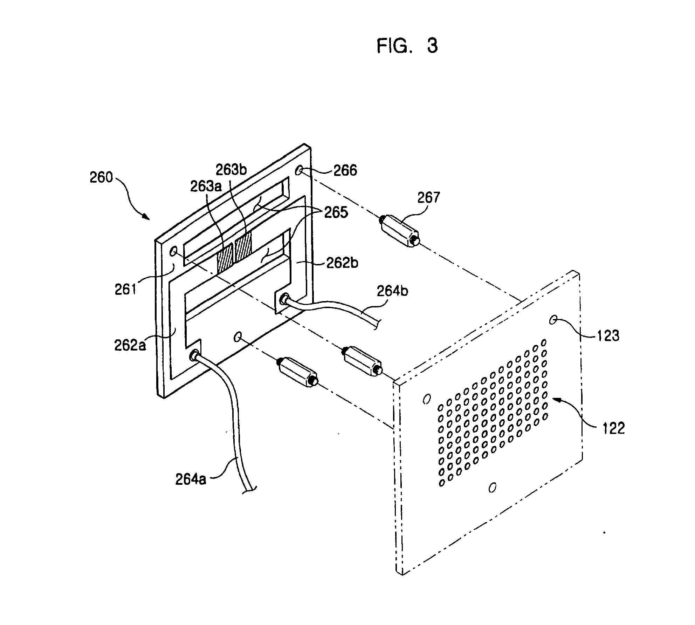

Figure 3 is a perspective view showing humidity detector 260. Referring to Figure 3, a first electrode 262a and a second electrode 262b are formed on a non-conductive board 261, such as a printed circuit board (PCB) or a PCB having a coating such as a ceramic coating and/or a polymer coating.

The electrodes 262a, 262b are of copper, gold, or other conductive material. The first and second electrodes 262a and 262b are spaced apart from each other by a certain distance to form a gap there between. The gap is shown as less than of equal to 0.18 mm, but may be wider up to 0.25 mm according to a desired resistance of the humidity detector 260. The air outlet from the cooking chamber 120 is deflected at the board 261 within the gap, wherein the moisture content of the air changes a resistance between the electrodes 262a, 262b indicating amount of the moisture in the air.

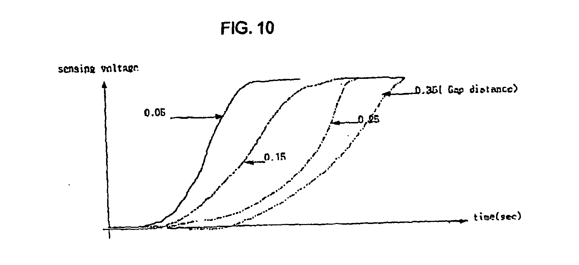

As shown in Figure 10, at a gap distance of 0.05 mm, the humidity detector 260 becomes susceptible to sudden changes in sensing values and is thus too sensitive for the purposes of cooking food in a microwave oven. In contrast, for a gap distance of 0.25 mm or greater, the humidity detector 260 is not sensitive enough for the purposes of cooking food in a microwave oven. However, for gap distances between 0.05 mm and 0.25 mm, the humidity detector 260 is better suited for cooking food in a microwave oven. In a preferred embodiment of the present invention, the gap is 0.15 mm. However, it is understood that other gap distances can be used in microwave ovens, and that the gap distances can be varied based on uses other than in microwave ovens according to a desired sensitivity and other factors.

A first detection electrode 263a is formed by plating one end of the first electrode 262a sequentially with nickel and gold so as to prevent oxidation due to moisture. A first wire 264a is attached to the other end of the first electrode 262a connect the first electrode 262a with the another device/element (not shown). Similarly, a second detection electrode 263b is formed by plating one end of the second electrode 262b sequentially with nickel and gold so as to prevent oxidation due to moisture. A second wire 264b is connected to the other end of the second electrode 262a so as to connect the second electrode 262b with another device/element (not shown). However, it is understood that other types of materials can be used for the board 261, electrodes 262a, 262b and the detection electrodes 263a, 263b.

Two detection slits 265 are formed above and below the first and second electrodes 262a and 262b to allow air discharged through the air outlets 122 to pass through. The detecting slits 265 have an area equal to or greater than twice the area of the first and second detecting electrodes 263a and 263b. The detection slits 265 need not be used in all circumstances.

Attaching holes 266 are formed to attach the humidity detector 260 to a wall of the cooking chamber 120. The humidity detector 260 is attached to the wall of the cooking chamber 120 with a plurality of spacers 267 inserted into the attaching holes 266 and a plurality of attaching holes 123 formed in the wall of the cooking chamber 120.

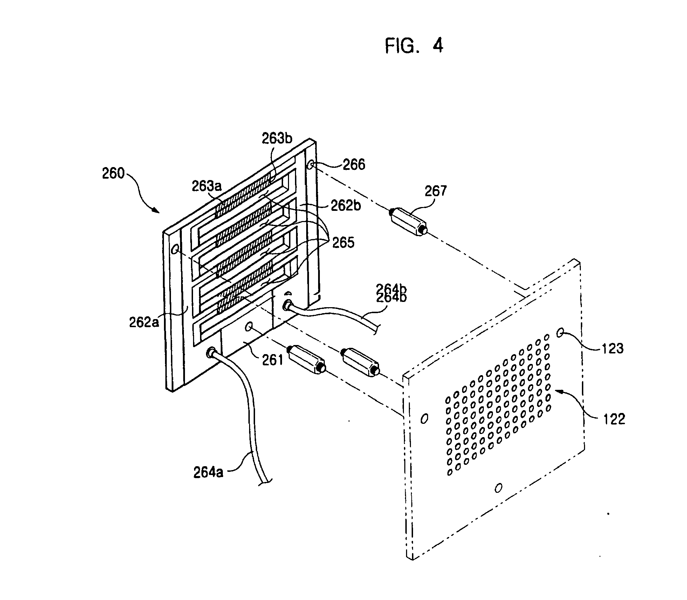

Referring to Figure 4, in another humidity detector design, the first and second electrodes 262a, 262b are provided in the form of interlocked combs by having multiple pairs of first and second detecting electrodes 263a and 236b such that the first and second detecting electrodes 263a and 263b are provided in the form of lines. The other construction of the humidity detector 260 is otherwise the same as the corresponding construction of the humidity detector of Figure 3. The use of multiple pairs of detecting electrodes 263a, 263b increases a sensitivity of the humidity detector 260.

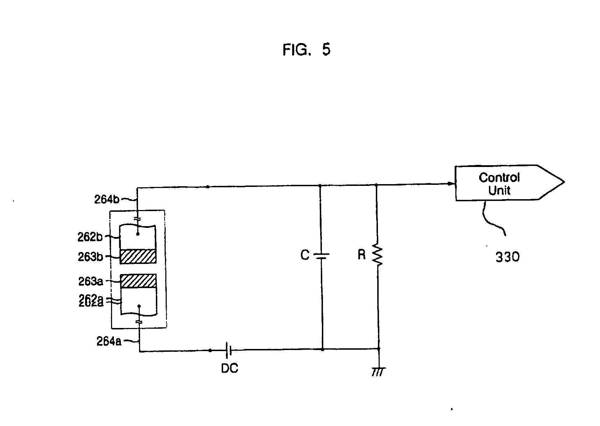

Referring to Figure 5, in the circuit for the humidity detector 260, the first wire 264a is connected to the first electrode 262a and to the anode of a direct current source DC of 5 volts. The cathode of the direct current source DC is grounded. The second wire 264b is connected to the second electrode 262b and to the control unit 330. A resistor R and a capacitor C are each connected in parallel with the second wire 264b and the ground. The resistor R has a value ranging 200 to 500kΩ, but can be varied depending on a voltage of the direct current source DC. It is understood that the connection directions of the first and second wires 264a and 264b respectively connected to the first and second electrodes 262a and 262b may be changed with each other.

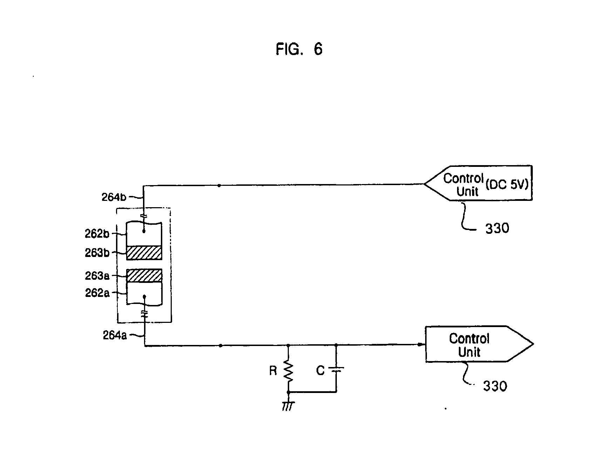

Referring to Figure 6, in an alternative circuit, there is no separate direct current source DC provided which is applied to the humidity detector 260. Instead, a direct current voltage of about 5 volts is supplied to the second electrode 262b through the second wire 264b from the control unit 330. The first electrode 262a is connected to the control unit 330 through the first wire 264a. A resistor R and a capacitor C are each connected in parallel with the first wire 264a and the ground. The resistor R has a value ranging 200 to 500kΩ, but can be varied depending on the direct current voltage. It is understood that the connection directions of the first and second wires 264a and 264b respectively connected to the first and second electrodes 262a and 262b may be changed with each other.

In the humidity detector 260, the resistance between the first and second detecting electrodes 263a and 263b is determined by the cross section of and the length between the first and second detecting electrodes 263a and 263b. In the shown embodiment, the length is constant, so the resistance only depends on the cross section of the first and second detecting electrodes 263a and 263b. If there is no moisture or vapour in the space between the first and second detecting electrodes 263a and 263b, the value of the resistance becomes infinite, thus forming an open circuit. If there moisture or vapour in the space between the first and second detecting electrodes 263a and 263b, the value of the resistance is reduced, thereby allowing a current to flow between the first and second detecting electrodes 263a and 263b. The amount of the current reflects the moisture content of the air received between the detecting electrodes 263a, 263b.

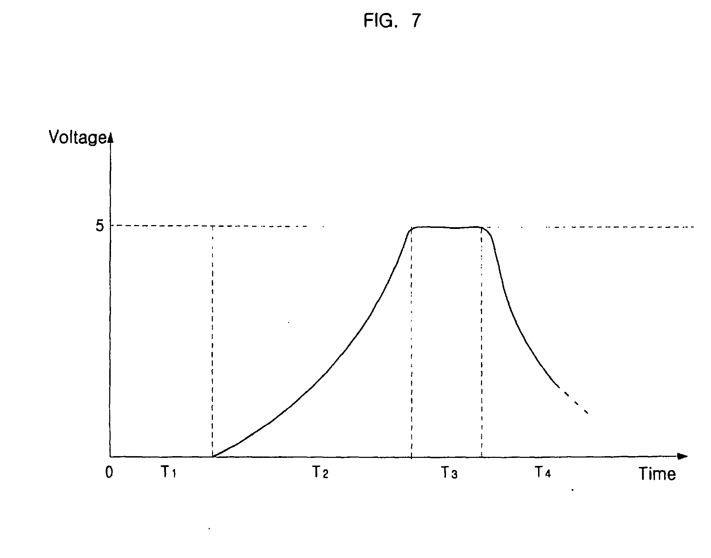

Referring to Figure 7, when a cooking operation is initiated, the food is heated by microwaves generated by the magnetron 220. Moisture formed while heating the food is detected by the humidity detector 260. In this case, the heating time of the microwave oven is varied depending on the amount of food. The load according to the amount of food is determined by measuring a first time period T1, during which no moisture was formed after the initiation of the cooking operation (i.e., the humidity detector 260 does not produce a voltage).

When a certain time period according to the amount of food (the first time period T1), has elapsed, the formation of moisture from the food begins and the amount of moisture in the air output from the cooking chamber 120 increases. The moisture or gas remains on the board 261 in the space between the first and second detecting electrodes 263a and 263b of the humidity detector 260.

Accordingly, the resistance between the first and second detecting electrodes 263a and 263b is reduced, thereby increasing the output voltage of the humidity detector 260. Thus, the output voltage of the humidity detector 260 gradually increases to reach the voltage of the direct current source DC. When the output voltage of the humidity detector 260 equals the voltage provided by the direct current source DC, the food has reached its boiling point. The time period between which the output voltage of the humidity detector 260 has reached the voltage of the direct current source DC and when the formation of moisture begins is a second time period T2.

When the food reaches its boiling point, the output voltage of the humidity detector 260 remains constant. In the shown embodiment, the voltage would be 5 Volts, which is the voltage of the direct current source DC. The third time period T3, during which the output voltage of the humidity detector 260 remaining constant, varies depending on the amount of food and the amount of the moisture contained in the food. Accordingly, the amount of the moisture contained in the food can be determined by measuring the third time period T3.

When the third time period T3 has elapsed, the amount of the moisture is considerably reduced, while the resistance between the first and second detecting electrodes 263a and 263b correspondingly increases. Accordingly, the output voltage of the humidity detector 260 is reduced. The time period for which the output voltage has been reduced is a fourth time period T4. The drying time period of the food can be determined by measuring the fourth time period T4.

The cooking state determination data relating to the first to fourth time period T1 to T4 are stored in the storage unit 320 for various foods. The storage unit 320 can be updated to account for new foods and refined cooking techniques using portable storage media or through a network connection such as through the internet.

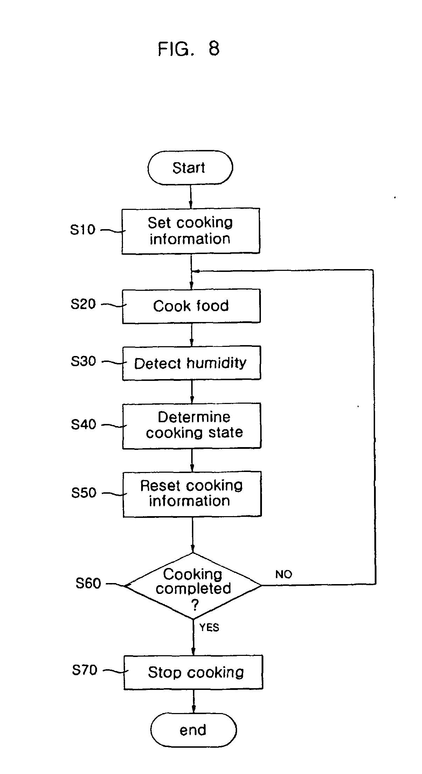

Hereinafter, the operation of the microwave oven of the present invention will described with reference to Figure 8. It is understood that the operation can be performed using a computer program encoded on a computer readable medium and executed by a computer.

Referring to Figure 8, the control unit 330 automatically or manually sets the cooking information so as to cook the food (S10). In order to set the cooking information, a user inputs an automatic cooking command, or directly inputs the cooking information through the input unit 310. The input unit 310 transmits a signal corresponding to the information provided by the user to the control unit 330. The control unit 330 automatically or manually sets the cooking information in response to the signal transmitted from the input unit 310.

After the cooking information has been set, the control unit 330 starts the cooking operation through the drive unit 340, which operates the magnetron 220, the tray motor 250, the fan 230, and any other similar devices (S20). Additionally, the control unit 330 controls the display unit 360 to display a variety of messages related to the cooking operation.

When the cooking operation is started, the control unit 330 detects the humidity (S30) in the air from the cooking chamber 120 using the humidity detector 260. The control unit 330 converts a voltage signal transmitted from the humidity detector 260 into a digital signal, and detects the humidity according to the value of the digital signal.

The control unit 330 determines the cooking state of the food according to the value of humidity detected by the humidity detector 260 at the step S30 (S40). Specifically, the control unit 330 determines the cooking state of the food according to the cooking state determination data set in advance (i.e., based upon known values for T₁, T₂, T₃ and/or T₄). The control unit 330 resets the cooking information, such as the cooking time and an amount of cooking electricity, according to the cooking state determined at the step S40 (S50).

Thereafter, the control unit 330 determines whether the cooking operation is completed (S60). If the cooking operation is not completed because a cooking time has not elapsed, the control unit 300 continues the cooking operation. If the cooking operation is completed because the cooking time elapses, the control unit 300 controls the drive unit 340 to stop the operation of the magnetron 220, the tray motor 250 and the fan 230, thus stopping the cooking operation (S70).

As described above, the present invention provides a microwave oven with a humidity detector, which has simple construction, so the humidity detector can be easily and inexpensively fabricated with a superior reliability. However, it is understood that the humidity detector according to the present invention could be used with other appliances such as convection ovens or other heating devices, in air conditioning systems such as in HVAC or humidifying systems, or in any application where humidity needs to be detected.

## Claims

1. A microwave oven including a humidity sensor (260) **characterised in that** the humidity sensor (260) comprises a non-conductive substrate (261) having at least one vent (265) arranged to allow air to pass therethrough, and first and second electrodes (263a, 263b) on the substrate (261), the electrodes (263a, 263b) being separated by an air-gap.

2. A microwave oven according to claim 1, wherein the non-conductive substrate (261) comprises a ceramic or polymer layer which is formed on the substrate (261) to form the bottom of the air-gap.

3. A microwave oven according to claim 1 or 2, wherein the substrate (261) comprises a printed circuit board.

4. A microwave oven according to claim 1, 2 or 3, wherein the electrodes (263a, 263b) include anti-corrosive layers.

5. A microwave oven according to claim 4, wherein the anti-corrosive layers comprises a layer of gold and a layer of nickel.

6. A microwave oven according to any preceding claim, wherein the width of the gap between the electrodes is in the range 0.05mm to 0.25mm.

7. A microwave oven according to any one of the preceding claims, wherein the vent (265) comprises a plurality of detecting slits having an area equal to or greater than twice an area of the first and second detecting electrodes.

8. The microwave oven according to any one of the preceding claims, further comprising a resistor and a capacitor, said resistor and said capacitor being each connected in parallel between the second electrode (263b) and a ground.

9. A microwave oven according to any one of the preceding claims comprising:
a magnetron (260) to general microwaves;
a cooking chamber (120) to contain food to be crooked using the generated microwaves;
the humidity sensor (260) being provided to receive air including moisture which is exhausted from said cooking chamber (120); and
a control unit (330) to control said magnetron (220) according to the moisture detected by said humidity sensor (260).

10. The microwave oven according to claim 10, further comprising
attaching holes (123, 266) formed on a wall of said cooking chamber (120) and the substrate (261), and
spacers (267),
wherein said humidity sensor (260) is mounted on the wall of said cooking chamber (120) using said spacers (267) inserted into said attaching holes.

## Patentansprüche

1. Mikrowellenofen einschließlich eines Feuchtigkeitssensors (260) **dadurch gekennzeichnet, dass** der Feuchtigkeitssensor (260) ein nichtleitendes Substrat (261) umfasst, das zumindest eine Öffnung (265) aufweist, die eingerichtet ist, Luft durchströmen zu lassen und erste und zweite Elektroden (263a, 263b) auf dem Substrat (261) aufweist, wobei die Elektroden (263a, 263b) durch einen Luftspalt voneinander getrennt sind.

2. Mikrowellenofen nach Anspruch 1, wobei das nichtleitende Substrat (261) eine Keramik- oder Polymerschicht umfasst, die auf dem Substrat (261) gebildet ist, um den Boden des Luftspalts zu bilden.

3. Mikrowellenofen nach Anspruch 1 oder 2, wobei das Substrat (261) eine Leiterplatte umfasst.

4. Mikrowellenofen nach Anspruch 1, 2 oder 3, wobei die Elektroden (263a, 263b) korrosionsschützende Schichten einschließen.

5. Mikrowellenofen nach Anspruch 4, wobei die korrosionsschützenden Schichten eine Goldschicht und eine Nickelschicht umfassen.

6. Mikrowellenofen nach einem beliebigen vorhergehenden Anspruch, wobei die Breite des Spalts zwischen den Elektroden im Bereich 0,05 mm bis 0,25 mm liegt.

7. Mikrowellenofen nach einem beliebigen der vorhergehenden Ansprüche, wobei die Öffnung (265) eine Mehrzahl von Detektionsschlitzen umfasst, die eine Fläche haben, die gleich der oder größer als das Doppelte einer Fläche der ersten und zweiten Detektionselektroden ist.

8. Mikrowellenofen nach einem beliebigen der vorhergehenden Ansprüche, der weiter einen Widerstand und einen Kondensator umfasst, wobei besagter Widerstand und besagter Kondensator jeweils parallel zwischen der zweiten Elektrode (263b) und mit einer Masse verbunden sind.

9. Mikrowellenofen nach einem beliebigen der vorhergehenden Ansprüche, umfassend:
ein Magnetron (260) zum Generieren von Mikrowellen;
eine Kochkammer (120) zum Beinhalten von Nahrung, die unter Verwendung der generierten Mikrowellen zu kochen ist;
den Feuchtigkeitssensor (260), der bereitgestellt ist, Luft einschließlich Feuchtigkeit zu empfangen, die aus besagter Kochkammer (120) entlüftet wird; und
eine Steuereinheit (330) zum Steuern des besagten Magnetrons (220) gemäß der vom besagten Feuchtigkeitssensor (260) detektierten Feuchtigkeit.

10. Mikrowellenofen nach Anspruch 10, der weiter umfasst:
Befestigungsbohrungen (123, 266), die an einer Wand der besagten Kochkammer (120) und dem Substrat (261) gebildet sind, und
Abstandshalter (267),
wobei besagter Feuchtigkeitssensor (260) an der Wand besagter Kochkammer (120) unter Verwendung besagter Abstandshalter (267) montiert ist, die in besagte Befestigungsbohrungen eingeschoben sind.

## Revendications

1. Four à micro-ondes possédant un capteur d'humidité (260) **caractérisé en ce que** le capteur d'humidité (260) comprend un substrat non conducteur (261) ayant au moins un évent (265) disposé de manière à permettre à l'air de passer à travers, et des première et deuxième électrodes (263a, 263b) sur le substrat (261), les électrodes (263a, 263b) étant séparées par un entrefer.

2. Four à micro-ondes selon la revendication 1, dans lequel le substrat non conducteur (261) comprend une couche en céramique ou polymère qui est formée sur le substrat (261) afin de former le fond de l'entrefer.

3. Four à micro-ondes selon la revendication 1 ou la revendication 2, dans lequel le substrat (261) comprend un circuit imprimé.

4. Four à micro-ondes selon la revendication 1, la revendication 2 ou la revendication 3, dans lequel les électrodes (263a, 263b) comportent des couches anticorrosion.

5. Four à micro-ondes selon la revendication 4, dans lequel les couches anticorrosion comprennent une couche d'or et une couche de nickel.

6. Four à micro-ondes selon l'une quelconque des revendications précédentes, dans lequel la largeur de l'entrefer entre les électrodes se situe dans la plage de 0,05 mm à 0,25 mm.

7. Four à micro-ondes selon l'une quelconque des revendications précédentes, dans lequel l'évent (265) comprend une pluralité de fentes de détection ayant une aire de surface égale ou supérieure à deux fois l'aire de surface des première et deuxième électrodes de détection.

8. Four à micro-ondes selon l'une quelconque des revendications précédentes, comprenant en plus une résistance et un condensateur, ladite résistance et ledit condensateur étant connectés chacun en parallèle entre la deuxième électrode (263b) et une masse.

9. Four à micro-ondes selon l'une quelconque des revendications précédentes, comprenant:
un magnétron (260) pour générer des ondes micrométriques ;
une chambre de cuisson (120) pour la cuisson des aliments à cuire en utilisant les ondes micrométriques générées ;
le capteur d'humidité (260) étant prévu pour recevoir l'air chargé d'humidité qui est évacué de ladite chambre de cuisson (120) ; et
un module de commande (330) pour commander ledit magnétron (220) en fonction de l'humidité détectée par ledit capteur d'humidité (260).

10. Four à micro-ondes selon la revendication 10, comprenant en plus :
des trous de fixation (123, 266) formés dans une paroi de ladite chambre de cuisson (120) et dans le substrat (261), et
des entretoises (267),
dans lequel ledit capteur d'humidité (260) est monté sur la paroi de ladite chambre de cuisson (120) en utilisant lesdites entretoises (267) introduites dans lesdits trous de fixation.
